(19) **Europäisches Patentamt / European Patent Office / Office européen des brevets**

(11) **EP 4 572 220 A1**

(12) **EUROPEAN PATENT APPLICATION**
published in accordance with Art. 153(4) EPC

(43) Date of publication:
**18.06.2025 Bulletin 2025/25**

(21) Application number: **23886227.0**

(22) Date of filing: **31.10.2023**

(51) International Patent Classification (IPC):
$H04L\ 7/00$ (2006.01)   $H04L\ 5/00$ (2006.01)
$H04L\ 1/08$ (2006.01)   $H04L\ 27/26$ (2006.01)
$H04W\ 84/06$ (2009.01)

(52) Cooperative Patent Classification (CPC):
H04L 1/08; H04L 5/00; H04L 7/00; H04L 27/26;
H04W 84/06

(86) International application number:
**PCT/KR2023/017162**

(87) International publication number:
**WO 2024/096531 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 KR 20220143028
16.02.2023 KR 20230021031**

(71) Applicants:
• **Hyundai Motor Company
Seoul 06797 (KR)**

• **Kia Corporation
Seoul 06797 (KR)**

(72) Inventors:
• **SUH, Young Kil
Hwaseong-si, Gyeonggi-do 18280 (KR)**
• **HONG, Ui Hyun
Hwaseong-si, Gyeonggi-do 18280 (KR)**
• **LEE, Jeong Su
Hwaseong-si, Gyeonggi-do 18280 (KR)**

(74) Representative: **Isarpatent
- Patent- und Rechtsanwälte Partg mbB
Friedrichstraße 31
80801 München (DE)**

(54) **METHOD AND DEVICE FOR TRANSMITTING AND RECEIVING UPLINK CHANNEL IN NON-TERRESTRIAL NETWORK**

(57)    Disclosed are a method and device for transmitting and receiving an uplink channel in a non-terrestrial network. A method of a first communication node comprises the steps of: mapping modulation symbols and reference signals to a resource area; obtaining information about a phase shift for each subcarrier in the resource area; applying the phase shift to each subcarrier to perform a first pre-compensation operation on the phase; and transmitting, to a second communication node, a signal that has had the first pre-compensation operation applied thereto.

EP 4 572 220 A1

【FIG. 11】

**Description**

[Technical Field]

The present disclosure relates to an uplink transmission technique in a non-terrestrial network, and more particularly, to a repetition transmission technique for a physical uplink shared channel (PUSCH).

[Background Art]

A communication network (e.g. 5G communication network, 6G communication network, etc.) to provide enhanced communication services compared to the existing communication network (e.g. long term evolution (LTE), LTE-Advanced (LTA-A), etc.) is being developed. The 5G communication network (e.g. new radio (NR) communication network) can support not only a frequency band of 6 GHz or below, but also a frequency band of 6 GHz or above. That is, the 5G communication network can support a frequency range (FR1) band and/or FR2 band. The 5G communication network can support various communication services and scenarios compared to the LTE communication network. For example, usage scenarios of the 5G communication network may include enhanced Mobile BroadBand (eMBB), Ultra Reliable Low Latency Communication (URLLC), Massive Machine Type Communication (mMTC), and the like.

The 6G communication network can support a variety of communication services and scenarios compared to the 5G communication network. The 6G communication networks can meet the requirements of hyper-performance, hyper-bandwidth, hyper-space, hyper-precision, hyper-intelligence, and/or hyper-reliability. The 6G communication networks can support various and wide frequency bands and can be applied to various usage scenarios (e.g. terrestrial communication, non-terrestrial communication, sidelink communication, and the like).

The communication network (e.g. 5G communication network, 6G communication network, etc.) may provide communication services to terminals located on the ground. Recently, the demand for communication services for not only terrestrial but also non-terrestrial airplanes, drones, and satellites has been increasing, and for this purpose, technologies for a non-terrestrial network (NTN) have been discussed. The non-terrestrial network may be implemented based on 5G communication technology, 6G communication technology, and/or the like. For example, in the non-terrestrial network, communication between a satellite and a terrestrial communication node or a non-terrestrial communication node (e.g. airplane, drone, or the like) may be performed based on 5G communication technology, 6G communication technology, and/or the like. In the NTN, the satellite may perform functions of a base station in a communication network (e.g. 5G communication network, 6G communication network, and/or the like).

Meanwhile, in a non-terrestrial network, a time offset (e.g. a time offset between a downlink time and an uplink time) may change rapidly due to movement of a satellite, and the time offset may be controlled through timing advance control (TAC). In other words, a base station may control a time offset based on TAC so that an uplink signal/channel of a terminal arrives at the base station according to a target timing advance (TA). However, when a transmission timing of the terminal is changed by TAC, power consistency and/or phase continuity may not be maintained. In other words, a time domain window (TDW) may be terminated. In this case, a gain of joint channel estimation may be reduced. Therefore, methods to address this issue are required.

[Disclosure]

[Technical Problem]

The present disclosure is directed to providing a method and an apparatus for repeated transmission of a PUSCH in a non-terrestrial network.

[Technical Solution]

A method of a first communication node, according to exemplary embodiments of the present disclosure for achieving the above-described objective, may comprise: mapping modulation symbols and reference signals to a resource region; obtaining information on a phase shift for each subcarrier within the resource region; performing a first pre-compensation operation for phase by applying the phase shift to each subcarrier; and transmitting a signal to which the first pre-compensation operation is applied to a second communication node.

The obtaining of the information on the phase shift may comprise: predicting the phase shift based on a position of a reference subcarrier, a phase shift difference between the reference subcarrier and another subcarrier, and a timing offset.

The timing offset may be a difference between a synchronization reference time and a predicted reception time of a received signal at the second communication node, and the timing offset may be determined based on a distance between the first communication node and the second communication node.

The obtaining of the information on the phase shift may comprise: receiving, from the second communication node, information on the phase shift predicted based on a position of a reference subcarrier, a phase shift difference between the reference subcarrier and another subcarrier, and a timing offset.

The method may further comprise: performing an inverse fast Fourier transform (IFFT) operation on a result of the first pre-compensation operation; obtaining information of a cyclic shift for a second pre-compensation operation for time; and performing the second pre-compensation operation for time by applying the cyclic shift to a result of the IFFT operation, wherein the signal transmitted to the second communication node may be a signal to which the first pre-compensation operation and the second pre-compensation operation are applied.

The obtaining of the information of the cyclic shift may comprise: determining the cyclic shift based on a timing offset caused by a movement of the second communication node and an IFFT size of the IFFT operation.

The obtaining of the information of the cyclic shift may comprise: receiving, from the second communication node, information on the cyclic shift determined based on a timing offset caused by a movement of the second communication node and an IFFT size of the IFFT operation.

The method may further comprise: transmitting, to the second communication node, information indicating that the first communication node supports the first pre-compensation operation; and receiving, from the second communication node, information indicating that a post-compensation operation of the second communication node is disabled.

Transmission of the signal may be repeated physical uplink shared channel (PUSCH) transmission, and power consistency and phase continuity may be maintained by performing the first pre-compensation operation within a time domain window (TDW) in which the repeated PUSCH transmission is performed.

The first communication node may be a terminal in a non-terrestrial network, and the second communication node may be a satellite or base station in the non-terrestrial network.

A first communication node, according to exemplary embodiments of the present disclosure for achieving the above-described objective, may comprise at least one processor, wherein the at least one processor may cause the first communication node to perform: mapping modulation symbols and reference signals to a resource region; obtaining information on a phase shift for each subcarrier within the resource region; performing a first pre-compensation operation for phase by applying the phase shift to each subcarrier; and transmitting a signal to which the first pre-compensation operation is applied to a second communication node.

In the obtaining of the information on the phase shift, the at least one processor may further cause the first communication node to perform: predicting the phase shift based on a position of a reference subcarrier, a phase shift difference between the reference subcarrier and another subcarrier, and a timing offset.

The timing offset may be a difference between a synchronization reference time and a predicted reception time of a received signal at the second communication node, and the timing offset may be determined based on a distance between the first communication node and the second communication node.

In the obtaining of the information on the phase shift, the at least one processor may further cause the first communication node to perform: receiving, from the second communication node, information on the phase shift predicted based on a position of a reference subcarrier, a phase shift difference between the reference subcarrier and another subcarrier, and a timing offset.

The at least one processor may further cause the first communication node to perform: performing an inverse fast Fourier transform (IFFT) operation on a result of the first pre-compensation operation; obtaining information of a cyclic shift for a second pre-compensation operation for time; and performing the second pre-compensation operation for time by applying the cyclic shift to a result of the IFFT operation, wherein the signal transmitted to the second communication node may be a signal to which the first pre-compensation operation and the second pre-compensation operation are applied.

In the obtaining of the information of the cyclic shift, the at least one processor may further cause the first communication node to perform: determining the cyclic shift based on a timing offset caused by a movement of the second communication node and an IFFT size of the IFFT operation.

In the obtaining of the information of the cyclic shift, the at least one processor may further cause the first communication node to perform: receiving, from the second communication node, information on the cyclic shift determined based on a timing offset caused by a movement of the second communication node and an IFFT size of the IFFT operation.

The at least one processor may further cause the first communication node to perform: transmitting, to the second communication node, information indicating that the first communication node supports the first pre-compensation operation; and receiving, from the second communication node, information indicating that a post-compensation operation of the second communication node is disabled.

Transmission of the signal may be repeated physical uplink shared channel (PUSCH) transmission, and power consistency and phase continuity may be maintained by performing the first pre-compensation operation within a time domain window (TDW) in which the repeated PUSCH transmission is performed.

The first communication node may be a terminal in a non-terrestrial network, and the second communication node may be a satellite or base station in the non-terrestrial network.

[Advantageous Effects]

According to the present disclosure, the transmitting node may compensate a phase and/or time by performing a pre-compensation operation for the phase and/or time and may transmit a signal/channel to which the pre-compensation operation is applied. The receiving node may compensate for the phase and/or time by performing a post-compensation operation for the phase and/or time on the signal received from the transmitting node. According to the pre-compensation operation and/or the post-compensation operation, power consistency and/or phase continuity can be maintained within a time domain window (TDW), thereby increasing the gain of joint channel estimation and consequently improving the reception performance of the signal/channel.

[Description of Drawings]

FIG. 1A is a conceptual diagram illustrating a first exemplary embodiment of a non-terrestrial network.
FIG. 1B is a conceptual diagram illustrating a second exemplary embodiment of a non-terrestrial network.
FIG. 2A is a conceptual diagram illustrating a third exemplary embodiment of a non-terrestrial network.
FIG. 2B is a conceptual diagram illustrating a fourth exemplary embodiment of a non-terrestrial network.
FIG. 2C is a conceptual diagram illustrating a fifth exemplary embodiment of a non-terrestrial network.
FIG. 3 is a block diagram illustrating a first exemplary embodiment of a communication node constituting a non-terrestrial network.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6A is a conceptual diagram illustrating a first exemplary embodiment of a protocol stack of a user plane in a transparent payload-based non-terrestrial network.
FIG. 6B is a conceptual diagram illustrating a first exemplary embodiment of a protocol stack of a control plane in a transparent payload-based non-terrestrial network.
FIG. 7A is a conceptual diagram illustrating a first exemplary embodiment of a protocol stack of a user plane in a regenerative payload-based non-terrestrial network.
FIG. 7B is a conceptual diagram illustrating a first exemplary embodiment of a protocol stack of a control plane in a regenerative payload-based non-terrestrial network.
FIG. 8 is a conceptual diagram illustrating a first exemplary embodiment of a change in distance between a satellite and a terminal according to movement (e.g. location) of the satellite and/or the terminal during a TDW in a regenerative payload-based non-terrestrial network.
FIG. 9 is a conceptual diagram illustrating a first exemplary embodiment of a change in distance between a satellite and a terminal according to movement (e.g. location) of the satellite and/or the terminal during a TDW in a transparent payload-based non-terrestrial network.
FIG. 10 is a conceptual diagram illustrating a first exemplary embodiment of timing drifts for PUSCH transmissions in a non-terrestrial network.
FIG. 11 is a block diagram illustrating a first exemplary embodiment of a transmitting node performing a pre-compensation operation.
FIG. 12 is a block diagram illustrating a second exemplary embodiment of a transmitting node that performs a pre-compensation operation.
FIG. 13 is a block diagram illustrating a first exemplary embodiment of a receiving node performing a post-compensation operation.
FIG. 14 is a block diagram illustrating a second exemplary embodiment of a receiving node performing a post-compensation operation.
FIG. 15A is a conceptual diagram illustrating a first exemplary embodiment of a general CP removal operation.
FIG. 15B is a conceptual diagram illustrating a first exemplary embodiment of an adaptive CP removal operation.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or RRC messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

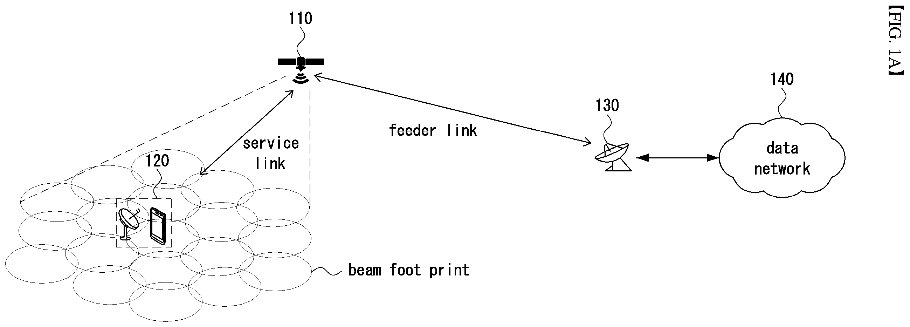

FIG. 1A is a conceptual diagram illustrating a first exemplary embodiment of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may provide communication services to the communication node 120 using one or more beams. The shape of a footprint of the beam of the satellite 110 may be elliptical or circular.

In the non-terrestrial network, three types of service links can be supported as follows.

- Earth-fixed: a service link may be provided by beam(s) that continuously cover the same geographic area at all times (e.g. geosynchronous orbit (GSO) satellite).
- quasi-earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. In this case, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

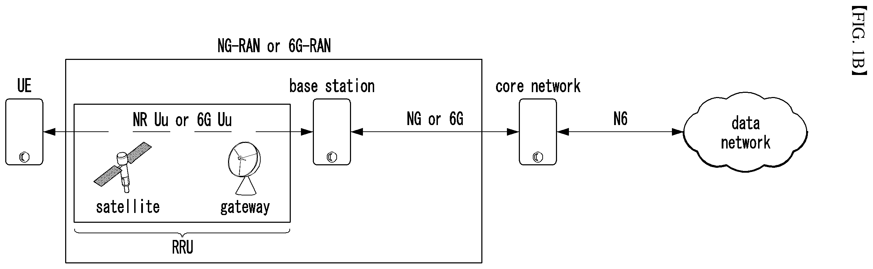

As shown in an exemplary embodiment of FIG. 1B, there may be a 'core network' between the gateway 130 and the data network 140 in a transparent payload-based NTN.

FIG. 1B is a conceptual diagram illustrating a second exemplary embodiment of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

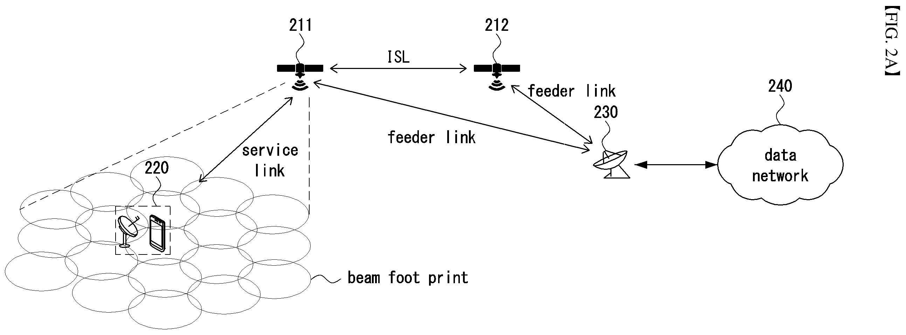

FIG. 2A is a conceptual diagram illustrating a third exemplary embodiment of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, re-modulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

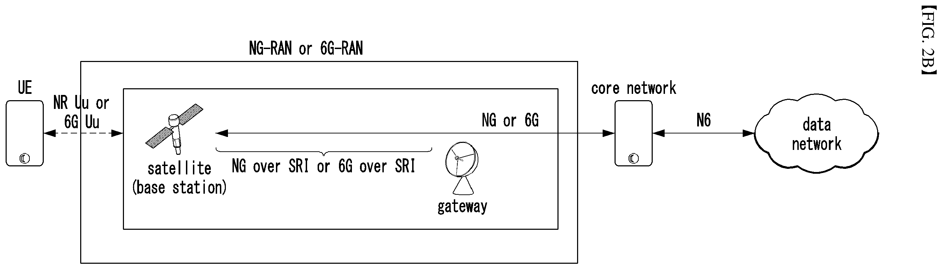

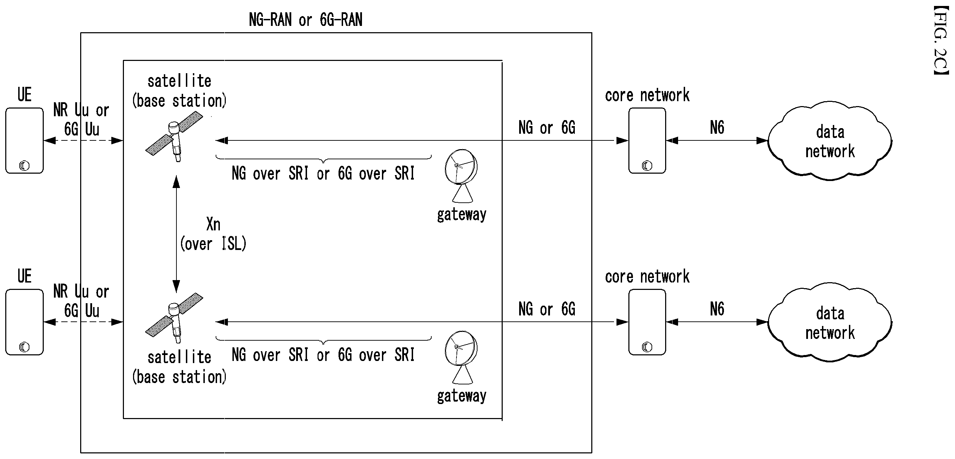

As shown in exemplary embodiments of FIG. 2B and FIG. 2C, there may be a 'core network' between the gateway 230 and the data network 240.

FIG. 2B is a conceptual diagram illustrating a fourth exemplary embodiment of a non-terrestrial network, and FIG. 2C is a conceptual diagram illustrating a fifth exemplary embodiment of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

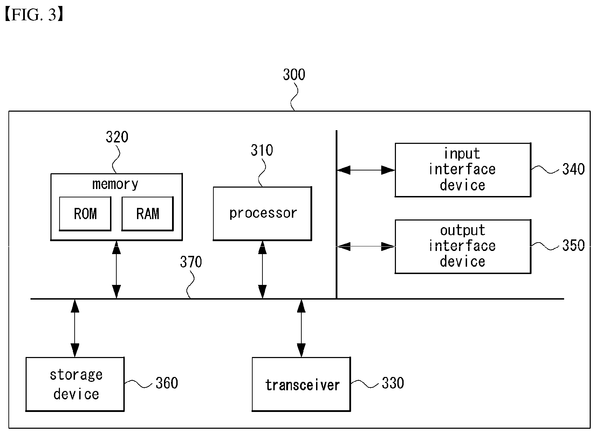

FIG. 3 is a block diagram illustrating a first exemplary embodiment of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

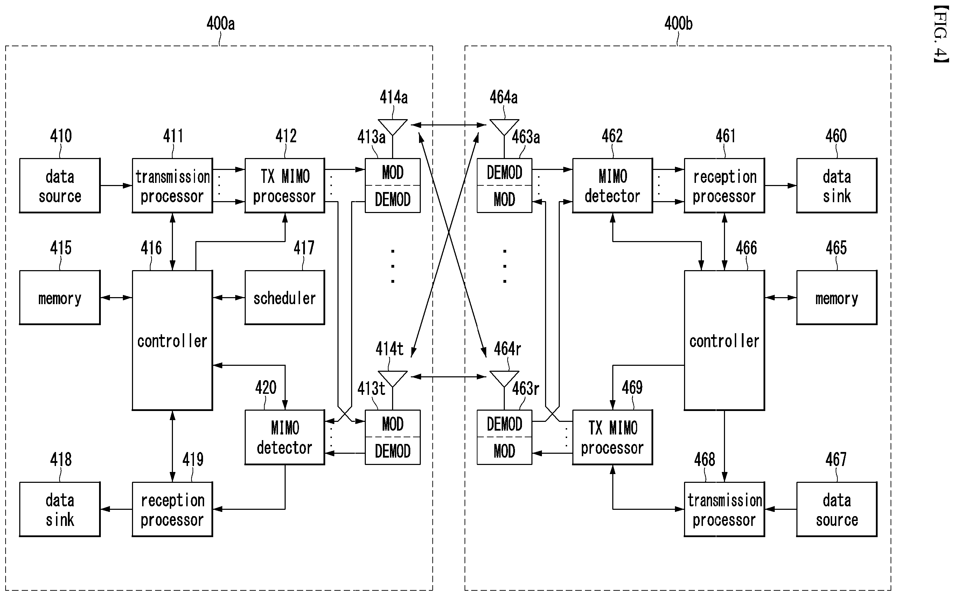

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

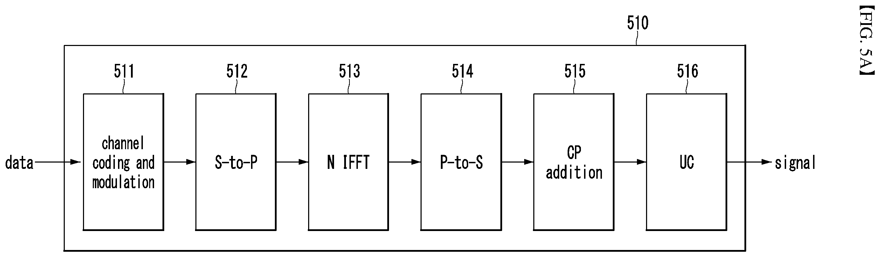

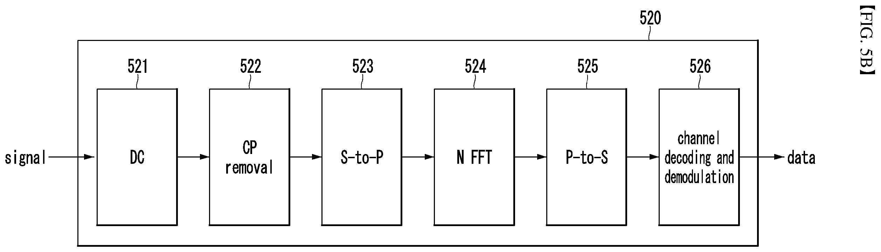

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

|  | NTN shown in FIG. 1 | NTN shown in FIG. 2 |
| --- | --- | --- |
| GEO | Scenario A | Scenario B |
| LEO (steerable beams) | Scenario C1 | Scenario D1 |
| LEO (beams moving with satellite) | Scenario C2 | Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'.

When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'. When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

| | Scenarios A and B | Scenarios C and D |
|---|---|---|
| Altitude | 35,786 km | 600 km<br>1,200 km |
| Spectrum (service link) | < 6 GHz (e.g. 2 GHz)<br>> 6 GHz (e.g. DL 20 GHz, UL 30 GHz) | |
| Maximum channel bandwidth capability (service link) | 30 MHz for band <6 GHz<br>1 GHz for band >6 GHz | |
| Maximum distance between satellite and communication node (e.g. UE) at the minimum elevation angle | 40,581 km | 1,932 km (altitude of 600 km)<br>3,131 km (altitude of 1,200 km) |
| Maximum round trip delay (RTD) (only propagation delay) | Scenario A: 541.46 ms (service and feeder links)<br>Scenario B: 270.73 ms (only service link) | Scenario C: (transparent payload: service and feeder links)<br>-5.77 ms (altitude of 60 0km)<br>-41.77 ms (altitude of 1,200 km)<br>Scenario D: (regenerative payload: only service link) -12.89 ms (altitude of 600 km)<br>-20.89 ms (altitude of 1,200 km) |
| Maximum differential delay within a cell | 10.3 ms | 3.12 ms (altitude of 600 km)<br>3.18 ms (altitude of 1,200 km) |
| Service link | NR defined in 3GPP | |
| Feeder link | Radio interfaces defined in 3GPP or non-3GPP | |

In addition, in the scenarios defined in Table 1, delay constraints may be defined as shown in Table 3 below.

[Table 3]

| | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

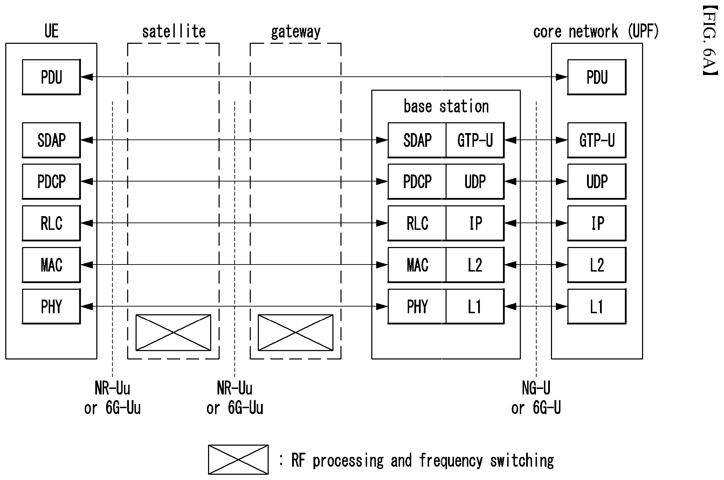

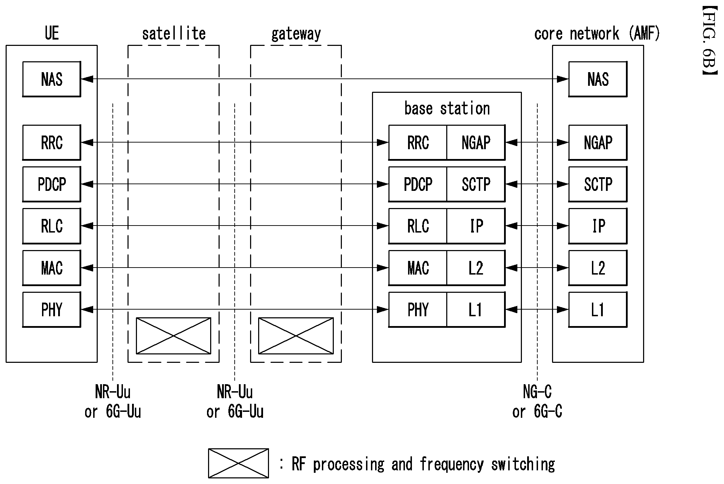

FIG. 6A is a conceptual diagram illustrating a first exemplary embodiment of a protocol stack of a user plane in a transparent payload-based non-terrestrial network, and FIG. 6B is a conceptual diagram illustrating a first exemplary embodiment of a protocol stack of a control plane in a transparent payload-based non-terrestrial network.

As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

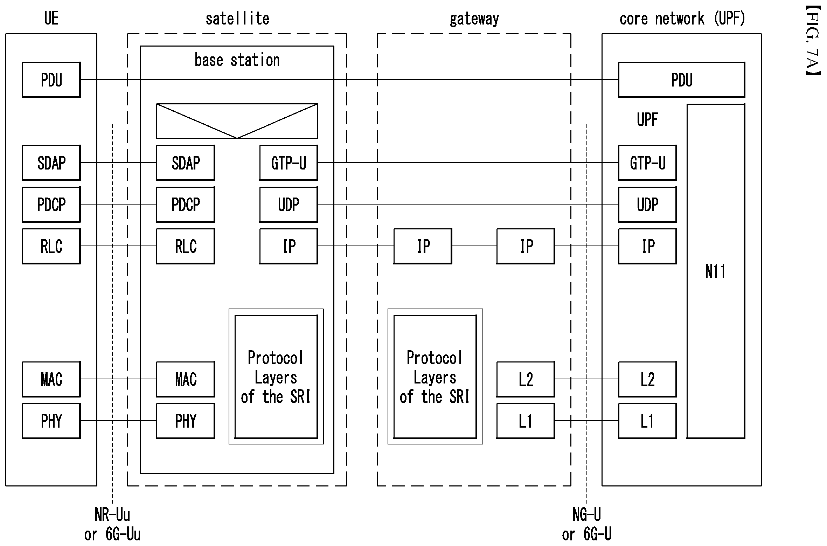

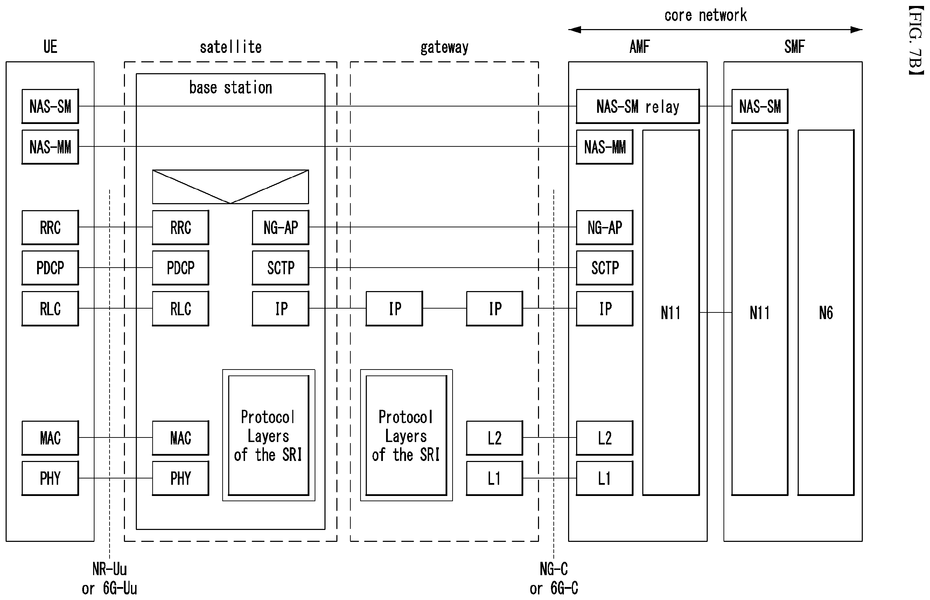

FIG. 7A is a conceptual diagram illustrating a first exemplary embodiment of a protocol stack of a user plane in a regenerative payload-based non-terrestrial network, and FIG. 7B is a conceptual diagram illustrating a first exemplary embodiment of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB19) including satellite assistance information for NTN access. A UE may receive the system information (e.g. SIB19) from the base station, identify the satellite assistance information included in the system information, and perform communication (e.g. non-terrestrial communication) based on the satellite assistance information. The SIB19 may include information element(s) defined in Table 4 below.

[Table 4]

| SIB19-r17 ::= SEQUENCE { | |
|---|---|
| ntn-Config-r17 | NTN-Config-r17 |
| t-Service-r17 | INTEGER(0..549755813887) |
| referenceLocation-r17 | ReferenceLocation-r17 |
| distanceThresh-r17 | INTEGER(0..65525) |
| ntn-NeighCellConfigList-r17 | NTN-NeighCellConfigList-r17 |
| lateNonCriticalExtension | OCTET STRING |
| ..., | |
| [[ | |
| ntn-NeighCellConfigListExt-v1720 | NTN-NeighCellConfigList-r17 |
| ]] | |
| } | |
| NTN-NeighCellConfigList-r17 ::= OF NTN-NeighCellConfig-r17 | SEQUENCE (SIZE(1..maxCellNTN-r17)) |
| NTN-NeighCellConfig-r17 ::= | SEQUENCE { |
| ntn-Config-r17 | NTN-Config-r17 |

| carrierFreq-r17 | ARFCN-ValueNR |
|---|---|
| physCellId-r17 | PhysCellId |
| } | |

*NTN-Config* defined in Table 4 may include information element(s) defined in Table 5 below.

[Table 5]

```
NTN-Config-r17 ::=              SEQUENCE {
      epochTime-r17                   EpochTime-r17
      ntn-UlSyncValidityDuration-r17 ENUMERATED{ s5, s10, s15, s20, s25, s30, s35,
s40, s45, s50, s55, s60, s120, s180, s240, s900}
      cellSpecificKoffset-r17        INTEGER(1..1023)
      kmac-r17                       INTEGER(1..512)
      ta-Info-r17                    TA-Info-r17
      ntn-PolarizationDL-r17         ENUMERATED {rhcp,lhcp,linear}
      ntn-PolarizationUL-r17         ENUMERATED {rhcp,lhcp,linear}
      ephemerisInfo-r17              EphemerisInfo-r17
      ta-Report-r17                  ENUMERATED {enabled}

      ...

}
EpochTime-r17 ::=              SEQUENCE {
      sfn-r17                        INTEGER(0..1023),
      subFrameNR-r17                 INTEGER(0..9)
}
TA-Info-r17 ::=               SEQUENCE   {
      ta-Common-r17                  INTEGER(0..66485757),
      ta-CommonDrift-r17             INTEGER(-257303..257303)
      ta-CommonDriftVariant-r17    INTEGER(0..28949)

}
```

*EphemerisInfo* defined in Table 5 may include information element(s) defined in Table 6 below.

[Table 6]

```
EphemerisInfo-r17 ::=               CHOICE {

        positionVelocity-r17            PositionVelocity-r17,

        orbital-r17                     Orbital-r17

}

PositionVelocity-r17 ::=             SEQUENCE {

        positionX-r17                   PositionStateVector-r17,

        positionY-r17                   PositionStateVector-r17,

        positionZ-r17                   PositionStateVector-r17,

        velocityVX-r17                  VelocityStateVector-r17,

        velocityVY-r17                  VelocityStateVector-r17,

        velocityVZ-r17                  VelocityStateVector-r17

}

Orbital-r17 ::=                     SEQUENCE {

        semiMajorAxis-r17               INTEGER (0..8589934591),

        eccentricity-r17               INTEGER (0..1048575),

        periapsis-r17                  INTEGER (0..268435455),

        longitude-r17                  INTEGER (0..268435455),

        inclination-r17                INTEGER (-67108864..67108863),

        meanAnomaly-r17                 INTEGER (0..268435455)

}

PositionStateVector-r17 ::= INTEGER (-33554432..33554431)

VelocityStateVector-r17 ::= INTEGER (-131072..131071)
```

In a communication system, a physical uplink shared channel (PUSCH) demodulation reference signal (DMRS) bundling operation may be supported. A PUSCH DMRS may refer to a DMRS used for demodulating a PUSCH. When the PUSCH DMRS bundling operation is supported, joint channel estimation for bundled PUSCH DMRSs may be performed. Additionally, when the PUSCH DMRS bundling operation is supported, communication coverage may be improved.

In a communication system (e.g. NTN), due to the limitation of the maximum transmission power of a terminal and/or a distance between the terminal and a satellite, the terminal may perform repeated uplink transmission. In other words, the terminal may repeatedly transmit uplink data. To provide sufficient transmission reliability, the number of repetitions for one transport block (TB) may increase. To improve communication coverage, the maximum number of repetitions of a PUSCH may be set to 32. A time domain window (TDW) that satisfies requirements for power consistency and/or phase continuity may be defined. Joint channel estimation for consecutive PUSCHs (e.g. repeatedly transmitted PUSCHs) within the TDW may be feasible. Bundled PUSCH DMRSs may be used for joint channel estimation.

In an environment where a channel between a terminal and a base station does not change and a transmission power of the terminal is well controlled, joint channel estimation may ideally be performed. In a non-terrestrial network, fast movement of a satellite may cause Doppler shift and/or timing drift. The timing drift may refer to a variation in a propagation delay of a physical signal. The Doppler shift and/or timing drift may affect a magnitude of path loss and/or a phase of a signal in a wireless channel. In this case, the TDW that satisfies power consistency and/or phase continuity may be reduced. In other words, when an event where power consistency and/or phase continuity is not maintained occurs, an actual TDW may terminate. Accordingly, a gain of joint channel estimation may decrease.

Due to satellite movement in the non-terrestrial network, a time offset (e.g. a time offset between a downlink time and an uplink time) may change rapidly, and the time offset may be controlled through timing advance control (TAC). In other words, the base station may control the time offset based on TAC so that an uplink signal/channel of the terminal arrives at the base station according to a target timing advance (TA). However, when a transmission timing of the terminal changes due to TAC, power consistency and/or phase continuity may not be maintained. In other words, the TDW may not be maintained. In this case, the gain of joint channel estimation may decrease. In the present disclosure, an uplink signal/channel may refer to an uplink signal and/or an uplink channel. An uplink signal may be interpreted to include both an uplink signal and an uplink channel depending on a context. An uplink channel may be interpreted to include both an uplink signal and an uplink channel depending on a context.

In the non-terrestrial network, timing offset variation and/or phase discontinuity may occur due to movement of the satellite. By compensating for the timing offset variation and/or phase discontinuity, the size of the TDW may be maximized. The PUSCH DMRS bundling operation and/or the repeated PUSCH transmission operation may be performed within the TDW. In this case, the performance of joint channel estimation at a receiving node (e.g. base station, satellite, or terminal) may be improved.

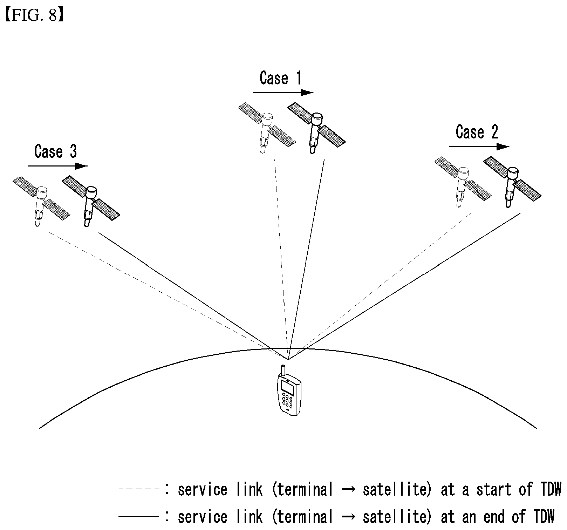

FIG. 8 is a conceptual diagram illustrating a first exemplary embodiment of a change in distance between a satellite and a terminal according to movement (e.g. location) of the satellite and/or the terminal during a TDW in a regenerative payload-based non-terrestrial network.

As shown in FIG. 8, in Case 2, a distance between the terminal and the satellite may increase over time, and a negative frequency shift may occur due to a Doppler effect. In Case 3, the distance between the terminal and the satellite may decrease over time, and a positive frequency shift may occur due to a Doppler effect. In Case 1, a change in distance between the terminal and the satellite over time may not be significant. The change in distance between the terminal and the satellite (e.g. the distance change in a wireless channel) and/or a frequency shift due to a Doppler effect in Case 1 may not be as large as the frequency shift in Case 2 and/or Case 3.

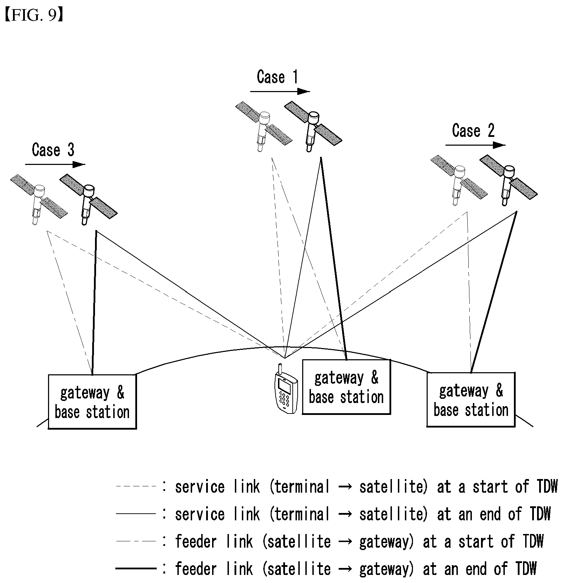

FIG. 9 is a conceptual diagram illustrating a first exemplary embodiment of a change in distance between a satellite and a terminal according to movement (e.g. location) of the satellite and/or the terminal during a TDW in a transparent payload-based non-terrestrial network.

As shown in FIG. 9, a distance between a terminal and a satellite and/or a distance between a gateway (e.g. terrestrial base station) and the satellite may change according to movement of the satellite. In other words, the length of a service link and/or the length of a feeder link may change. The change in the length of the service link and/or the feeder link may affect timing drift and/or Doppler shift. The timing drift may refer to a change in timing offset.

The present disclosure may be applied to the exemplary embodiment of FIG. 8 (e.g. regenerative payload-based non-terrestrial network) and/or the exemplary embodiment of FIG. 9 (e.g. transparent payload-based non-terrestrial network). The distance between the terminal and the satellite (e.g. distance of the service link) over time $t$ may be defined as $L_S(t)$. The distance between the gateway (e.g. terrestrial base station) and the satellite (e.g. terrestrial base station) (e.g. the distance of the feeder link) over time $t$ may be defined as $L_F(t)$. A sum of $L_S(t)$ and $L_F(t)$ may be defined as $L_{SF}(t)$. A change rate of $L_{SF}(t)$ over time may be defined as $\dfrac{d}{dt}L_{SF}(t)$. A communication node (e.g. base station, satellite, or terminal) may predict a change in timing offset and/or a frequency shift (e.g. Doppler shift) based on $\dfrac{d}{dt}L_{SF}(t)$, and may perform a pre-compensation operation and/or a post-compensation operation for the predicted change in timing offset and/or the predicted frequency shift.

According to the pre-compensation operation and/or the post-compensation operation, reception performance may be improved. Additionally, a TDW may be maintained, and a gain of joint channel estimation in the TDW may be enhanced. In a signal/channel transmission and reception procedure, one of the pre-compensation operation and the post-compensation operation may be applied. As another method, both the pre-compensation operation and the post-compensation operation may be applied in the signal/channel transmission and reception procedure. The pre-compensation operation may refer to a pre-correction operation. The post-compensation operation may refer to a post-correction operation.

**[Method 1] Pre-compensation operation for timing drift and/or common phase shift**

In a non-terrestrial network, a terminal may perform repeated PUSCH transmission. While the repeated PUSCH transmission is performed, a physical length of a wireless channel (e.g. a service link and/or a feeder link) may change due to movement of a satellite. Due to the change in the length of the wireless channel, the length of a TDW in which the repeated PUSCH transmission is performed may decrease. In other words, due to the change in the length of the wireless channel, power consistency and/or phase continuity may not be maintained, and in this case, the TDW (e.g. actual TDW) may terminate. Due to the change in the length of the wireless channel and/or the termination of the actual TDW, the performance of joint channel estimation may degrade. To solve the above issue (e.g. decrease in the length of the actual TDW and/or degradation of joint channel estimation performance), a compensation operation for timing drift (e.g. timing offset) and/or phase shift (e.g. phase offset) may be performed while the repeated PUSCH transmission is performed.

A transmission timing of a PUSCH may be adjusted through TAC. In this case, since power consistency and/or phase continuity may not be maintained, the gain of joint channel estimation may decrease. In the present disclosure, timings of PUSCH transmissions to which joint channel estimation is applied may be assumed to be the same. In the present disclosure, timing compensation based on TAC may not be applied to PUSCH transmission.

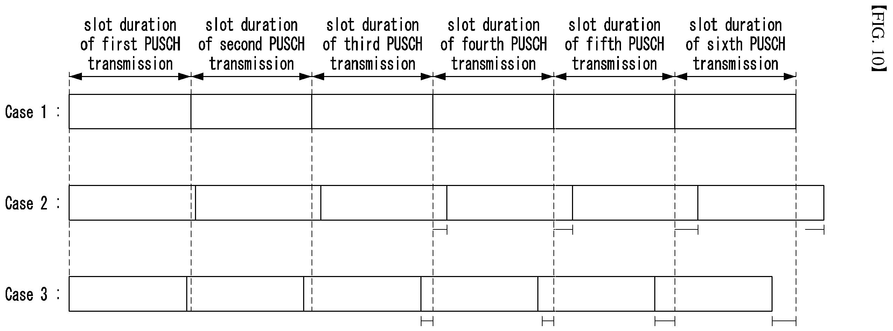

FIG. 10 is a conceptual diagram illustrating a first exemplary embodiment of timing drifts for PUSCH transmissions in a non-terrestrial network.

As shown in FIG. 10, a terminal may perform repeated PUSCH transmission. For example, the terminal may repeat PUSCH transmission six times. Case 1 may correspond to Case 1 illustrated in FIG. 8 and/or Case 1 illustrated in FIG. 9. Case 2 may correspond to Case 2 illustrated in FIG. 8 and/or Case 2 illustrated in FIG. 9. Case 3 may correspond to Case 3 illustrated in FIG. 8 and/or Case 3 illustrated in FIG. 9. In the exemplary embodiment of FIG. 10, a timing may refer to a reception timing of a PUSCH at a base station (e.g. satellite). In Cases 1, 2, and 3, a timing of the first PUSCH transmission may be aligned. For example, the timing of the first PUSCH transmission may be aligned with a slot boundary. Timing(s) of PUSCH transmission(s) after the first PUSCH transmission may not be aligned. For example, in Cases 2 and 3, the timings of PUSCH transmissions after the first PUSCH transmission may not be aligned with the slot boundary. The present disclosure may be applied not only when the timing of the first PUSCH transmission is aligned but also when the timing of the first PUSCH transmission is not aligned.

- Case 1: Since a change in distance between the satellite and the terminal due to movement of the satellite is not significant, timing drift may be small.
- Case 2: Since a distance between the satellite and the terminal increases due to movement of the satellite, a reception timing of the PUSCH (e.g. PUSCH transmission) at the base station (e.g. satellite) may be delayed over time. In other words, timing drift may occur.
- Case 3: Since the distance between the satellite and the terminal decreases due to movement of the satellite, a reception timing of the PUSCH (e.g. PUSCH transmission) at the base station (e.g. satellite) may be advanced over time. In other words, timing drift may occur.

**[Method 1-1] Pre-compensation operation in the frequency domain**

In Case 1 illustrated in FIG. 10, since timing drift is small, a channel estimation result for each slot in which the PUSCH transmission is performed may be nearly identical. In this case, joint channel estimation may be performed, and the accuracy of channel estimation may be improved through the joint channel estimation. In Case 2 and/or Case 3 illustrated in FIG. 10, while the repeated PUSCH transmission is performed, the timing offset may gradually increase, and, accordingly, the gain of joint channel estimation through coherent combining may not be obtained. The timing offset may refer to an offset between a slot boundary (e.g. subframe boundary) and a reception time of the PUSCH transmission (e.g. actual reception start time or predicted reception start time) at the base station (e.g. satellite). The timing offset may be estimated based on the distance between the base station (e.g. satellite) and the terminal.

The timing offset (e.g. the timing offset for the PUSCH transmission) may cause a phase shift $\varphi[k]$ for each subcarrier $k$ in the frequency domain at a receiving node (e.g. receiver). Here, $k$ may be a subcarrier index. A phase shift variation between adjacent subcarriers may be defined as $\varphi[k] - \varphi[k - 1]$. The phase shift variation $\varphi[k] - \varphi[k - 1]$ between adjacent subcarriers may be proportional to the timing offset.

A transmitting node (e.g. transmitter) may predict a phase shift of a subcarrier caused by the timing offset for a transmission channel/signal and may pre-compensate the phase shift in the opposite direction of the predicted phase shift. The phase shift to be pre-compensated may be defined as $\varphi^t[k]$, and $\varphi^t[k]$ may be defined as shown in Equation 1 below. The transmitting node may determine the phase shift $\varphi^t[k]$ using Equation 1.

[Equation 1]

$$\varphi^t[k] = \varphi^t_\Delta (k - k_0) + \varphi^t_0$$

In the present disclosure, the transmitting node may refer to a communication node that transmits data (e.g. data unit or data channel), and the receiving node may refer to a communication node that receives data (e.g. data unit or data channel). $\varphi^t_\Delta$ may refer to the phase shift difference between subcarriers (e.g. adjacent subcarriers) caused by the timing offset at a specific time $t$ (e.g. specific slot or specific symbol). $\varphi^t_\Delta$ may be proportional to the timing offset at the specific time $t$ (e.g. specific slot or specific symbol). $k_0$ may refer to a position of a reference frequency (e.g. reference

subcarrier). $\varphi_0^t$ may represent the phase shift at the reference frequency.

To perform the pre-compensation operation, the communication node (e.g. terminal, base station, or satellite) may use the following information element(s).

- Information Element 1: Position $k_0$ of the reference subcarrier
- Information Element 2: Information on a phase to be pre-compensated at the reference subcarrier (e.g. phase shift difference between the reference subcarrier and another subcarrier)
- Information Element 3: timing offset or information corresponding to the timing offset

The reference subcarrier, which is Information Element 1, may be one of uplink subcarriers. The base station (e.g. satellite) may notify the terminal of position information of the reference subcarrier through signaling. The terminal may determine the position information of the reference subcarrier through signaling from the base station (e.g. satellite). In other words, the base station (e.g. satellite) may explicitly indicate the position of the reference subcarrier to the terminal. Alternatively, the position of the reference subcarrier may be implicitly indicated to the terminal. The terminal may determine the position of the reference subcarrier through an implicit method.

For example, the reference subcarrier may be a specific subcarrier within a resource block (RB) for a PUSCH allocated to the terminal. The specific subcarrier may be a subcarrier with the lowest frequency within the RB, a subcarrier with the highest frequency within the RB, or a subcarrier with a center frequency within the RB. In another example, the reference subcarrier may be a specific subcarrier within an active bandwidth part (BWP) of the terminal. The specific subcarrier may be a subcarrier with the lowest frequency within the active BWP, a subcarrier with the highest frequency within the active BWP, or a subcarrier with a center frequency within the active BWP. In another example, the reference subcarrier may be a specific subcarrier within a bandwidth of a carrier component. The specific subcarrier may be a subcarrier with the lowest frequency within the bandwidth of the carrier component, a subcarrier with the highest frequency within the bandwidth of the carrier component, or a subcarrier with a center frequency within the bandwidth of the carrier component.

Each of Information Element 2 and Information Element 3 may be slot-specific information or symbol-specific information. Alternatively, each of Information Element 2 and Information Element 3 may be information specific to a time period larger than a slot. The base station (e.g. satellite) may notify the terminal of Information Element 2 and/or Information Element 3 through signaling. The terminal may determine Information Element 2 and/or Information Element 3 through signaling from the base station. Alternatively, the terminal may estimate Information Element 2 and/or Information Element 3 without signaling from the base station.

Information Element 3 may be determined for each unit of a specific time period. The specific time period may be configured in units of a symbol (e.g. OFDM symbol), a slot, or 1 millisecond (ms). The specific time period may include two or more slots. The specific time period may be configured in various manners. The timing offset may be determined based on the distance between the terminal and the base station (e.g. satellite). For example, based on the distance between the terminal and the base station (e.g. satellite), a time at which a signal/channel transmitted from the terminal is received at the base station (e.g. satellite) may be predicted, and the timing offset may be an offset between the predicted time and a synchronization reference time (e.g. slot boundary or subframe boundary).

The base station (e.g. satellite) may estimate the length of a service link and/or a feeder link based on ephemeris information of the satellite, location information of the terminal, and/or location information of the terrestrial base station. Based on the estimated length of the service link and/or the feeder link, the base station may predict the timing offset (e.g. information corresponding to the timing offset) and transmit the predicted timing offset to the terminal through signaling. The terminal may determine the timing offset (e.g. information corresponding to the timing offset) through signaling from the base station. Alternatively, the terminal may estimate the length of the service link and/or the feeder link based on ephemeris information of the satellite, location information of the terminal, and/or location information of the terrestrial base station. Based on the estimated length of the service link and/or the feeder link, the terminal may predict the timing offset (e.g. information corresponding to the timing offset). The terminal may transmit the predicted timing offset to the base station through signaling.

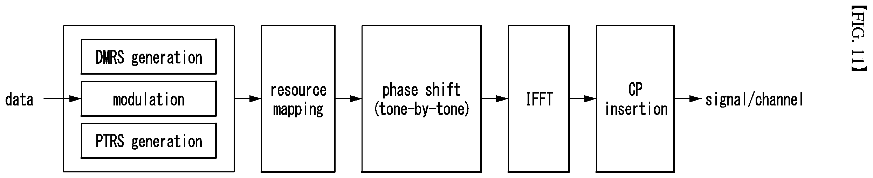

FIG. 11 is a block diagram illustrating a first exemplary embodiment of a transmitting node performing a pre-compensation operation.

As shown in FIG. 11, in uplink communication, a transmitting node may be a terminal, and in downlink communication, a transmitting node may be a base station or a satellite. The transmitting node may generate modulation symbols by performing a modulation operation on data. The transmitting node may perform a generation operation for a DMRS (e.g. PUSCH DMRS). The transmitting node may perform a generation operation for a phase tracking reference signal (PTRS). The transmitting node may map the modulation symbols, the DMRS, and/or the PTRS to resources (e.g. time and frequency resources). Before performing an inverse fast Fourier transform (IFFT) operation in the frequency domain, the transmitting node may apply a phase shift (e.g. phase pre-compensation) to each subcarrier. The phase shift operation may be performed by a phase shifter included in the transmitting node.

For example, the transmitting node may predict $\varphi^t[k]$ based on Information Elements 1, 2, and/or 3. In other words, the transmitting node may determine $\varphi^t[k]$ based on Equation 1. Alternatively, the receiving node (e.g. base station or satellite) may predict $\varphi^t[k]$ based on Information Elements 1, 2, and/or 3. In other words, the receiving node may determine $\varphi^t[k]$ based on Equation 1. The receiving node may notify the transmitting node of $\varphi^t[k]$ through signaling. The transmitting node may determine $\varphi^t[k]$ through signaling from the receiving node. The transmitting node may apply a phase shift of to each subcarrier. In Method 1-1, the phase shift (e.g. phase pre-compensation) may be applied to each subcarrier.

**[Method 1-2] Pre-compensation operation in the time domain**

According to Method 1-2, performance degradation caused by timing drift (e.g. change in timing offset) and/or Doppler shift may be mitigated by using a common phase shift and/or a cyclic shift. Information Elements 1, 2, and/or 3 defined in Method 1-1 may be used in Method 1-2. The operation(s) according to Method 1-1 may be applied to Method 1-2. The transmitting node may perform Method 1-1 or Method 1-2. Alternatively, the transmitting node may perform both Method 1-1 and Method 1-2. The receiving node (e.g. base station or satellite) may transmit information, through signaling, instructing the transmitting node (e.g. terminal) to perform at least one of Method 1-1 or Method 1-2. The transmitting node may perform Method 1-1 and/or Method 1-2 as instructed by signaling from the receiving node.

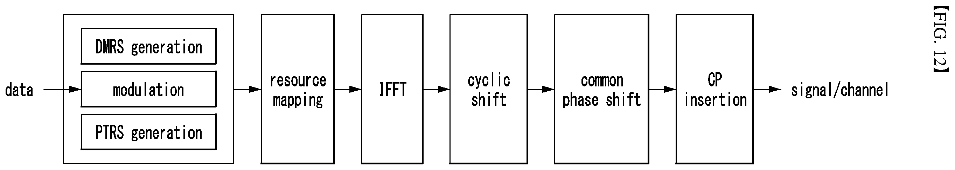

FIG. 12 is a block diagram illustrating a second exemplary embodiment of a transmitting node that performs a pre-compensation operation.

As shown in FIG. 12, in uplink communication, a transmitting node may be a terminal, and in downlink communication, a transmitting node may be a base station or a satellite. The transmitting node may perform a modulation operation on data to generate modulation symbols. The transmitting node may perform a generation operation for a DMRS (e.g. PUSCH DMRS). The transmitting node may perform a generation operation for a PTRS. The transmitting node may map the modulation symbols, the DMRS, and/or the PTRS to resources. The transmitting node may perform an IFFT operation in the frequency domain. Alternatively, before performing the IFFT operation in the frequency domain, the transmitting node may apply a phase shift (e.g. phase pre-compensation) for each subcarrier.

The transmitting node may perform the IFFT operation after performing the resource mapping operation or phase shift operation, and after performing the IFFT operation, may apply a cyclic shift and/or a common phase shift. In other words, between the IFFT operation and a CP insertion operation, the cyclic shift operation and/or the common phase shift operation may be performed. The cyclic shift operation may be performed by a cyclic shifter included in the transmitting node. The common phase shift operation may be performed by a common phase shifter included in the transmitting node. In the cyclic shift stage, the transmitting node (e.g. cyclic shifter) may perform the operation according to the following Equation 2.

[Equation 2]

$$Y[n] = X[mod(n + n_\Delta, N_{IFFT})]$$

$X[n]$ may be an input value of the cyclic shifter. $Y[n]$ may be an output value of the cyclic shifter. $N_{IFFT}$ may denote the size of the IFFT. $n_\Delta$ may be a value obtained from a timing offset (e.g. a timing offset caused by movement of the satellite). $n_\Delta$ may be an arbitrary integer. $n_\Delta$ may be set for each symbol (e.g. OFDM symbol), slot, or a time period larger than a slot.

The base station (e.g. satellite) may predict $n_\Delta$ based on the satellite's ephemeris information, the terminal's location information, and/or the location information of the terrestrial base station, and may transmit the predicted $n_\Delta$ to the terminal through signaling. The terminal may determine $n_\Delta$ through the base station's signaling. Alternatively, the terminal may predict $n_\Delta$ based on the satellite's ephemeris information, the terminal's location information, and/or the location information of the terrestrial base station. The terminal may transmit the predicted $n_\Delta$ to the base station through signaling.

For example, when $n_\Delta = 5$ and n=0, $Y[0] = X[5]$ may be derived. In this case, the transmitting node may apply a cyclic shift corresponding to five samples. In other words, in the time domain, a transmission timing of a signal/channel may be advanced by five samples. In this case, a transmission delay of five samples may be compensated. The sample may correspond to a symbol, a slot, or a time period larger than a slot.

In the exemplary embodiments of FIGS. 8 to 10, signal distortion (e.g. phase discontinuity) may occur due to the movement of the satellite (e.g. Doppler shift). In this case, the performance of joint channel estimation may be degraded. To reduce signal distortion, the common phase shift illustrated in FIG. 12 may be applied.

The common phase shifter may shift the phases of all input signals uniformly within a symbol (e.g. single OFDM symbol) or within a slot. The magnitude of the phase shift applied by the common phase shifter may be determined in consideration of the Doppler shift and/or timing drift (e.g. timing offset). When the common phase shift is applied, the issue of phase discontinuity in repeated PUSCH transmission over multiple slots may be resolved.

The common phase shift operation may be performed immediately before the CP insertion operation. Alternatively, the common phase shift operation may be performed at any time after the resource mapping operation. The common phase shift operation may be performed by a phase shifter (or, complex multiplier) different from an existing phase shifter.

**[Method 2] Post-compensation operation for timing drift and/or common phase shift**

Method 2 may be applied in the following situations.

- During repeated PUSCH transmission, the terminal may support a PUSCH DMRS bundling operation.
- During a slot period (e.g. TDW) in which the PUSCH DMRS bundling operation is applied, TA updates may not be performed.
- During one TDW, the terminal may or may not perform pre-compensation for timing drift and/or phase shift.

Timing drift may be considered as a timing offset that changes linearly over time (e.g. within a sufficiently short period) and a constantly occurring Doppler shift (e.g. frequency offset). The receiving node (e.g. base station or satellite) may perform a post-compensation operation for the timing offset and/or Doppler shift of the signal/channel received from the transmitting node (e.g. terminal).

If the receiving node supports the post-compensation operation, signal distortion for terminals that do not support DMRS bundling (e.g. PUSCH DMRS bundling) may also be compensated. In the present disclosure, a region may refer to a coverage (e.g. communication coverage) served by a single beam, a single cell, or a single satellite.

**[Method 2-1] Post-compensation operation per region in the frequency domain**

In a non-terrestrial network, a satellite may include multiple cells, and each cell may perform communication using multiple beams. The service for terminals located in adjacent areas (e.g. within the same region) may be provided by the same beam, the same cell, or the same satellite. The terminals located in the same region may be assumed to have similar timing drift characteristics. The timing drift characteristic may refer to a difference between the synchronization reference time (e.g. slot boundary) and the reception time of the PUSCH transmission (e.g. predicted reception start time or actual reception start time) in the exemplary embodiment of FIG. 10, or a characteristic corresponding to the difference (e.g. characteristic similar to the difference).

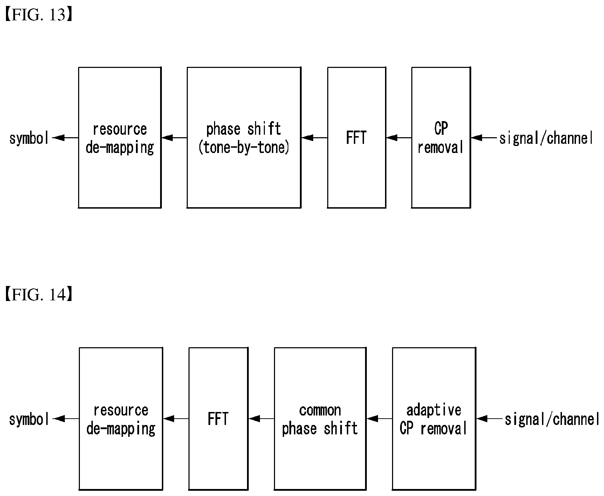

FIG. 13 is a block diagram illustrating a first exemplary embodiment of a receiving node performing a post-compensation operation.

As shown in FIG. 13, in uplink communication, a receiving node may be a base station or a satellite, while in downlink communication, a receiving node may be a terminal. The receiving node may receive a signal/channel from the transmitting node and perform a CP removal operation on the signal/channel. The receiving node may perform an FFT operation on a result of the CP removal operation. The receiving node may apply a phase shift to a result of the FFT operation. The receiving node may perform a resource de-mapping operation on a result of the phase shift operation. The phase shift operation may be applied to each subcarrier (e.g. tone). When a phase is compensated for each subcarrier of the received signal, signal distortion caused by timing drift may be canceled out.

The receiving node may compensate for the phase by $\varphi^t[k]$ determined based on Equation 1 in the same or a similar manner as Method 1-1. Alternatively, the receiving node may determine $\varphi^t[k]$ based on an equation different from Equation 1 and apply a phase shift corresponding to the determined amount $\varphi^t[k]$. Here, $k$ may represent a subcarrier index (e.g. tone index). In Equation 1, other parameters (e.g. $\varphi^t_\Delta$, $k_0$, and $\varphi^t_0$) may be set to arbitrary values. Based on information regarding timing drifts of terminals within a region (e.g. timing drift characteristics), optimal values (or values corresponding to the optimal values) for the other parameters (e.g. $\varphi^t_\Delta$, $k_0$, and $\varphi^t_0$) may be determined. Alternatively, the other parameters (e.g. $\varphi^t_\Delta$, $k_0$, and $\varphi^t_0$) may be set based on the same or a similar method as Method 1-1.

Although terminals within a region may have different timing drift characteristics, it may be assumed that terminals within a sufficiently small region have similar timing drift characteristics. Therefore, in Method 2-1, it may be assumed that all terminals within a region have the same timing drift, and this timing drift may be applied across the entire bandwidth. The single timing drift may be a representative timing drift for all the terminals within the region.

The transmitting node may support a pre-compensation operation, and the receiving node may support a post-compensation operation (e.g. post-compensation operation according to Method 2-1). In this case, the compensation operations for timing offset and/or phase shift may be redundantly performed at both the transmitting node and the receiving node. If the compensation operations are redundantly performed at both the transmitting node and the receiving node, the reception performance may degrade. To prevent this issue, the following signaling operation may be performed. The signaling operation may be performed for terminals within a region. The signaling operation may be at least one of an SI signaling operation, RRC signaling operation, MAC signaling operation, or PHY signaling operation.

- Signaling operation 1: The transmitting node (e.g. terminal) may transmit information indicating whether DMRS bundling is supported and/or information indicating whether a pre-compensation operation is supported to the receiving node (e.g. base station, satellite).
- Signaling operation 2: The receiving node (e.g. base station, satellite) may transmit information indicating enablement or disablement of the post-compensation operation to the transmitting node (e.g. terminal). The receiving node (e.g. base station, satellite) may transmit information indicating whether the pre-compensation operation is performed at the transmitting node (e.g. terminal) to the transmitting node. If the transmitting node does not support (e.g. perform) the pre-compensation operation, the post-compensation operation may be enabled. If the transmitting node supports (e.g. performs) the pre-compensation operation, the post-compensation operation may be disabled.
- Signaling operation 3: The receiving node (e.g. base station, satellite) may transmit to the transmitting node (e.g. terminal) a compensation value (e.g. correction value) used for the post-compensation operation and/or pre-compensation operation, information corresponding to the compensation value (e.g. similar information), values of the respective parameters defined in Equation 1, and/or information corresponding to the respective parameter values (e.g. similar information).

**[Method 2-2] RB/terminal-specific post-compensation operation in the frequency domain**

Method 2-2 may be the same as Method 2-1. However, the phase shift operation in Method 2-2 may differ from that in Method 2-1.

In Method 2-1, post-compensation operations (e.g. post-compensation for phase shift) for all terminals within a region may be determined based on a single timing drift characteristic. In other words, the equation used for the post-compensation operation may be commonly applied to all terminals and all RBs.

In Method 2-2, the post-compensation operation may be performed based on a different equation for each RB or based on the same equation for different RBs. For example, if RBs 0 to 7 are allocated to a terminal 1 and RBs 8 to 15 are allocated to a terminal 2, an equation for the post-compensation operation for the terminal 1 may be different from that for the terminal 2. If some RBs are allocated to multiple users (e.g. in the case of multi-user (MU)-MIMO), phase shift operations therefor may be performed based on a selected timing drift characteristic among the timing drift characteristics of multiple users or a combination of the timing drift characteristics of multiple users.

The transmitting node may support a pre-compensation operation, and the receiving node may support a post-compensation operation (e.g. post-compensation operation according to Method 2-2). In this case, the compensation operations for timing offset and/or phase shift may be redundantly performed at both the transmitting node and the receiving node. If the compensation operations are redundantly performed at both the transmitting node and the receiving node, the reception performance may degrade. To prevent this issue, the following signaling operation may be performed. The signaling operation may be performed for terminals within a region. The signaling operation may be at least one of an SI signaling operation, RRC signaling operation, MAC signaling operation, or PHY signaling operation.

- Signaling operation 1: The transmitting node (e.g. terminal) may transmit information indicating whether DMRS bundling is supported and/or information indicating whether a pre-compensation operation is supported to the receiving node (e.g. base station, satellite).
- Signaling operation 2: The receiving node (e.g. base station, satellite) may transmit information indicating enablement or disablement of the post-compensation operation to the transmitting node (e.g. terminal). The receiving node (e.g. base station, satellite) may transmit information indicating whether the pre-compensation operation is performed at the transmitting node (e.g. terminal) to the transmitting node. If the transmitting node does not support (e.g. perform) the pre-compensation operation, the post-compensation operation may be enabled. If the transmitting node supports (e.g. performs) the pre-compensation operation, the post-compensation operation may be disabled.
- Signaling operation 3: The receiving node (e.g. base station, satellite) may transmit to the transmitting node (e.g. terminal) a compensation value (e.g. correction value) used for the post-compensation operation and/or pre-compensation operation, information corresponding to the compensation value (e.g. similar information), values of the respective parameters defined in Equation 1, and/or information corresponding to the respective parameter values (e.g. similar information).

**[Method 2-3] RB/terminal-specific post-compensation operation in the time domain**

A combination of Method 2-3 and Method 2-1 or a combination of Method 2-3 and Method 2-2 may be performed. Alternatively, Method 2-3 may be performed independently of Method 2-1 and/or Method 2-2.

FIG. 14 is a block diagram illustrating a second exemplary embodiment of a receiving node performing a post-compensation operation.

As shown in FIG. 14, in uplink communication, a receiving node may be a base station or a satellite, while in downlink communication, a receiving node may be a terminal. The receiving node may receive a signal/channel from the transmitting node and perform an adaptive CP removal operation on the signal/channel. The receiving node may perform a common phase shift operation on a result of the adaptive CP removal operation. The receiving node may perform an FFT operation on a result of the common phase shift operation. The receiving node may perform a resource de-mapping operation on a result of the FFT operation.

Method 2-3 may be similar to Method 1-2. A difference between Method 2-3 and Method 1-2 will be described below. Except for the difference, the operations in Method 2-3 and Method 1-2 may be the same.

In Method 2-3, instead of a general CP removal operation, the adaptive CP removal operation may be performed. The adaptive CP removal operation may encompass the general CP removal operation.

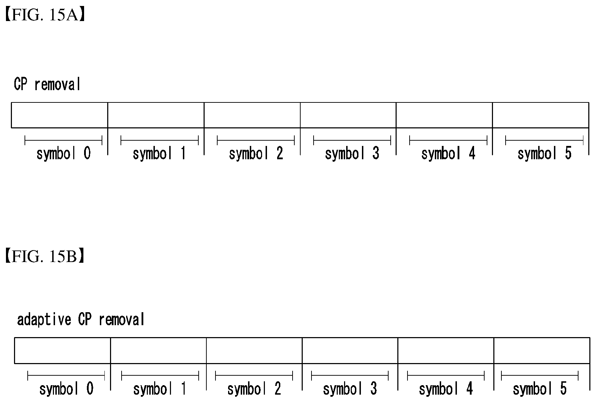

FIG. 15A is a conceptual diagram illustrating a first exemplary embodiment of a general CP removal operation, and FIG. 15B is a conceptual diagram illustrating a first exemplary embodiment of an adaptive CP removal operation.

As shown in FIG. 15A, in the general CP removal operation, a symbol (e.g. OFDM symbol) may be extracted from a fixed period of samples of a received signal. In other words, the N-th OFDM symbol may be extracted from samples within a period of [CP_start(N+1)-NFFT-offset, CP_start(N+1)-1-offset] for a constant offset. Here, CP_start(N+1) may represent a start sample index of a CP for the (N+1)-th OFDM symbol, NFFT may represent the FFT size, and offset may be an arbitrary positive value.

As shown in FIG. 15B, in the adaptive CP removal operation, a symbol-specific adaptive offset may be used. By performing the adaptive CP removal operation, signal distortion caused by timing drifts may be reduced.

Referring again to FIG. 14, the common phase shift operation may also be performed after the FFT operation. Alternatively, the common phase shift operation may be performed at any point in time. The symbol-specific adaptive offset may be determined based on one of the timing drift characteristics of terminals within a region (e.g. representative timing drift characteristic).

The transmitting node may support a pre-compensation operation, and the receiving node may support a post-compensation operation (e.g. post-compensation operation according to Method 2-3). In this case, the compensation operations for timing offset and/or phase shift may be redundantly performed at both the transmitting node and the receiving node. If the compensation operations are redundantly performed at both the transmitting node and the receiving node, the reception performance may degrade. To prevent this issue, the following signaling operation may be performed. The signaling operation may be performed for terminals within a region. The signaling operation may be at least one of an SI signaling operation, RRC signaling operation, MAC signaling operation, or PHY signaling operation.

- Signaling operation 1: The transmitting node (e.g. terminal) may transmit information indicating whether DMRS bundling is supported and/or information indicating whether a pre-compensation operation is supported to the receiving node (e.g. base station, satellite).
- Signaling operation 2: The receiving node (e.g. base station, satellite) may transmit information indicating enablement or disablement of the post-compensation operation to the transmitting node (e.g. terminal). The receiving node (e.g. base station, satellite) may transmit information indicating whether the pre-compensation operation is performed at the transmitting node (e.g. terminal) to the transmitting node. If the transmitting node does not support (e.g. perform) the pre-compensation operation, the post-compensation operation may be enabled. If the transmitting node supports (e.g. performs) the pre-compensation operation, the post-compensation operation may be disabled.
- Signaling operation 3: The receiving node (e.g. base station, satellite) may transmit information regarding the timing drift characteristic used for the adaptive CP removal operation to the transmitting node (e.g. terminal). For example, the information on the timing drift characteristic may indicate that an OFDM symbol is extracted by increasing or decreasing a offset by a certain number $\tau_\Delta$ of microseconds per millisecond on average.

The aforementioned methods (e.g. Method 1, Method 1-1, Method 1-2, Method 2, Method 2-1, Method 2-2, and/or Method 2-3) may be used in combination. The aforementioned methods (e.g. Method 1, Method 1-1, Method 1-2, Method 2, Method 2-1, Method 2-2, and/or Method 2-3) may be selectively used. A combination of the aforementioned methods (e.g., Method 1 Method 1-1, Method 1-2, Method 2, Method 2-1, Method 2-2, and/or Method 2-3) may be used. Among the aforementioned methods (e.g. Method 1, Method 1-1, Method 1-2, Method 2, Method 2-1, Method 2-2, and/or Method 2-3), method(s) used in a signal/channel transmission and reception procedure may be selected by the transmitting node (e.g. terminal) and/or the receiving node (e.g. base station, satellite), and information on the selected method(s) may be transmitted to other communication nodes through signaling.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a first communication node, comprising:

   mapping modulation symbols and reference signals to a resource region;
   obtaining information on a phase shift for each subcarrier within the resource region;
   performing a first pre-compensation operation for phase by applying the phase shift to each subcarrier; and
   transmitting a signal to which the first pre-compensation operation is applied to a second communication node.

2. The method according to claim 1, wherein the obtaining of the information on the phase shift comprises: predicting the phase shift based on a position of a reference subcarrier, a phase shift difference between the reference subcarrier and another subcarrier, and a timing offset.

3. The method according to claim 2, wherein the timing offset is a difference between a synchronization reference time and a predicted reception time of a received signal at the second communication node, and the timing offset is determined based on a distance between the first communication node and the second communication node.

4. The method according to claim 1, wherein the obtaining of the information on the phase shift comprises: receiving, from the second communication node, information on the phase shift predicted based on a position of a reference subcarrier, a phase shift difference between the reference subcarrier and another subcarrier, and a timing offset.

5. The method according to claim 1, further comprising:

   performing an inverse fast Fourier transform (IFFT) operation on a result of the first pre-compensation operation;
   obtaining information of a cyclic shift for a second pre-compensation operation for time; and
   performing the second pre-compensation operation for time by applying the cyclic shift to a result of the IFFT operation,
   wherein the signal transmitted to the second communication node is a signal to which the first pre-compensation operation and the second pre-compensation operation are applied.

6. The method according to claim 5, wherein the obtaining of the information of the cyclic shift comprises: determining the cyclic shift based on a timing offset caused by a movement of the second communication node and an IFFT size of the IFFT operation.

7. The method according to claim 5, wherein the obtaining of the information of the cyclic shift comprises: receiving, from the second communication node, information on the cyclic shift determined based on a timing offset caused by a movement of the second communication node and an IFFT size of the IFFT operation.

8. The method according to claim 1, further comprising:

   transmitting, to the second communication node, information indicating that the first communication node supports the first pre-compensation operation; and
   receiving, from the second communication node, information indicating that a postcompensation operation of the second communication node is disabled.

9. The method according to claim 1, wherein transmission of the signal is repeated physical uplink shared channel (PUSCH) transmission, and power consistency and phase continuity are maintained by performing the first pre-compensation operation within a time domain window (TDW) in which the repeated PUSCH transmission is performed.

10. The method according to claim 1, wherein the first communication node is a terminal in a non-terrestrial network, and the second communication node is a satellite or base station in the non-terrestrial network.

11. A first communication node comprising at least one processor, wherein the at least one processor causes the first communication node to perform:

    mapping modulation symbols and reference signals to a resource region;
    obtaining information on a phase shift for each subcarrier within the resource region;
    performing a first pre-compensation operation for phase by applying the phase shift to each subcarrier; and
    transmitting a signal to which the first pre-compensation operation is applied to a second communication node.

12. The first communication node according to claim 11, wherein in the obtaining of the information on the phase shift, the at least one processor further causes the first communication node to perform: predicting the phase shift based on a position of a reference subcarrier, a phase shift difference between the reference subcarrier and another subcarrier, and a timing offset.

13. The first communication node according to claim 12, wherein the timing offset is a difference between a synchronization reference time and a predicted reception time of a received signal at the second communication node, and the timing offset is determined based on a distance between the first communication node and the second communication node.

14. The first communication node according to claim 11, wherein in the obtaining of the information on the phase shift, the at least one processor further causes the first communication node to perform: receiving, from the second communication node, information on the phase shift predicted based on a position of a reference subcarrier, a phase shift difference between the reference subcarrier and another subcarrier, and a timing offset.

15. The first communication node according to claim 11, wherein the at least one processor further causes the first communication node to perform:

    performing an inverse fast Fourier transform (IFFT) operation on a result of the first pre-compensation operation;
    obtaining information of a cyclic shift for a second pre-compensation operation for time; and
    performing the second pre-compensation operation for time by applying the cyclic shift to a result of the IFFT operation,
    wherein the signal transmitted to the second communication node is a signal to which the first pre-compensation operation and the second pre-compensation operation are applied.

16. The first communication node according to claim 15, wherein in the obtaining of the information of the cyclic shift, the at least one processor further causes the first communication node to perform: determining the cyclic shift based on a timing offset caused by a movement of the second communication node and an IFFT size of the IFFT operation.

17. The first communication node according to claim 15, wherein in the obtaining of the information of the cyclic shift, the at least one processor further causes the first communication node to perform: receiving, from the second communication node, information on the cyclic shift determined based on a timing offset caused by a movement of the second communication node and an IFFT size of the IFFT operation.

18. The first communication node according to claim 11, wherein the at least one processor further causes the first communication node to perform:

transmitting, to the second communication node, information indicating that the first communication node supports the first pre-compensation operation; and
receiving, from the second communication node, information indicating that a postcompensation operation of the second communication node is disabled.

19. The first communication node according to claim 11, wherein transmission of the signal is repeated physical uplink shared channel (PUSCH) transmission, and power consistency and phase continuity are maintained by performing the first pre-compensation operation within a time domain window (TDW) in which the repeated PUSCH transmission is performed.

20. The first communication node according to claim 11, wherein the first communication node is a terminal in a non-terrestrial network, and the second communication node is a satellite or base station in the non-terrestrial network.

【FIG. 1A】

EP 4 572 220 A1

【FIG. 1B】

NG-RAN or 6G-RAN

UE

base station

core network

NR Uu or 6G Uu

NG or 6G

N6

data network

satellite

gateway

RRU

【FIG. 2A】

【FIG. 2B】

【FIG. 2C】

【FIG. 3】

【FIG. 4】

【FIG. 5A】

【FIG. 5B】

signal → 【**DC** (521)】 → 【**CP removal** (522)】 → 【**S-to-P** (523)】 → 【**N FFT** (524)】 → 【**P-to-S** (525)】 → 【**channel decoding and demodulation** (526)】 → data

520

【FIG. 6A】

【FIG. 6B】

【FIG. 7A】

【FIG. 7B】

【FIG. 8】

----- : service link (terminal → satellite) at a start of TDW
——— : service link (terminal → satellite) at an end of TDW

【FIG. 9】

-----: service link (terminal → satellite) at a start of TDW
───── : service link (terminal → satellite) at an end of TDW
- - - : feeder link (satellite → gateway) at a start of TDW
───── : feeder link (satellite → gateway) at an end of TDW

【FIG. 10】

[FIG. 11]

【FIG. 12】

【FIG. 13】

symbol ← | resource de-mapping | ← | phase shift (tone-by-tone) | ← | FFT | ← | CP removal | ← signal/channel

【FIG. 14】

symbol ← | resource de-mapping | ← | FFT | ← | common phase shift | ← | adaptive CP removal | ← signal/channel

【FIG. 15A】

CP removal

| | | | | | |
|---|---|---|---|---|---|
| symbol 0 | symbol 1 | symbol 2 | symbol 3 | symbol 4 | symbol 5 |

【FIG. 15B】

adaptive CP removal

| | | | | | |
|---|---|---|---|---|---|
| symbol 0 | symbol 1 | symbol 2 | symbol 3 | symbol 4 | symbol 5 |

## INTERNATIONAL SEARCH REPORT

International application No.

**PCT/KR2023/017162**

| A. | CLASSIFICATION OF SUBJECT MATTER |
|---|---|

**H04L 7/00**(2006.01)i; **H04L 5/00**(2006.01)i; **H04L 1/08**(2006.01)i; **H04L 27/26**(2006.01)i; **H04W 84/06**(2009.01)i

According to International Patent Classification (IPC) or to both national classification and IPC

| B. | FIELDS SEARCHED |
|---|---|

Minimum documentation searched (classification system followed by classification symbols)

H04L 7/00(2006.01); H04B 7/06(2006.01); H04B 7/185(2006.01); H04L 1/18(2006.01); H04L 27/26(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자원 (resource), 매핑 (mapping), 서브캐리어 (subcarrier), 선-보상 (pre-compensate), 위상 시프트 (phase shift)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022-211577 A1 (LG ELECTRONICS INC.) 06 October 2022 (2022-10-06)<br>See paragraphs [0102]-[0231]. | 1-4,8-14,18-20 |
| A | | 5-7,15-17 |
| Y | KR 10-2019-0090327 A (LG ELECTRONICS INC.) 01 August 2019 (2019-08-01)<br>See paragraphs [0088]-[0144]. | 1-4,8-14,18-20 |
| A | KR 10-2019-0015698 A (LG ELECTRONICS INC.) 14 February 2019 (2019-02-14)<br>See claims 1-9. | 1-20 |
| A | KR 10-2021-0094455 A (ELECTRONICS AND TELECOMMUNICATIONS RESEARCH INSTITUTE) 29 July 2021 (2021-07-29)<br>See claims 1-8. | 1-20 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/017162** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2016-0353433 A1 (TEXAS INSTRUMENTS INCORPORATED) 01 December 2016 (2016-12-01)<br>See paragraphs [0031]-[0072]. | 1-20 |

## INTERNATIONAL SEARCH REPORT
### Information on patent family members

International application No.

**PCT/KR2023/017162**

| Patent document cited in search report | | | Publication date (day/month/year) | Patent family member(s) | | | Publication date (day/month/year) |
|---|---|---|---|---|---|---|---|
| WO | 2022-211577 | A1 | 06 October 2022 | None | | | |
| KR | 10-2019-0090327 | A | 01 August 2019 | CN | 111771362 | A | 13 October 2020 |
| | | | | CN | 111771362 | B | 09 November 2021 |
| | | | | EP | 3729755 | A1 | 28 October 2020 |
| | | | | EP | 3729755 | B1 | 13 April 2022 |
| | | | | EP | 4040748 | A1 | 10 August 2022 |
| | | | | ES | 2913756 | T3 | 06 June 2022 |
| | | | | JP | 2021-101568 | A | 08 July 2021 |
| | | | | JP | 2021-507648 | A | 22 February 2021 |
| | | | | JP | 2023-022300 | A | 14 February 2023 |
| | | | | JP | 6856822 | B2 | 14 April 2021 |
| | | | | JP | 7193567 | B2 | 20 December 2022 |
| | | | | KR | 10-2019-0134565 | A | 04 December 2019 |
| | | | | KR | 10-2294611 | B1 | 30 August 2021 |
| | | | | US | 10999821 | B2 | 04 May 2021 |
| | | | | US | 11611463 | B2 | 21 March 2023 |
| | | | | US | 2021-0007083 | A1 | 07 January 2021 |
| | | | | US | 2021-0219270 | A1 | 15 July 2021 |
| | | | | US | 2023-0155876 | A1 | 18 May 2023 |
| | | | | WO | 2019-146902 | A1 | 01 August 2019 |
| KR | 10-2019-0015698 | A | 14 February 2019 | CN | 109565429 | A | 02 April 2019 |
| | | | | CN | 109565429 | B | 17 December 2021 |
| | | | | CN | 110999185 | A | 10 April 2020 |
| | | | | CN | 110999185 | B | 05 August 2022 |
| | | | | EP | 3477885 | A1 | 01 May 2019 |
| | | | | EP | 3637664 | A1 | 15 April 2020 |
| | | | | EP | 3637664 | B1 | 23 August 2023 |
| | | | | JP | 2020-503761 | A | 30 January 2020 |
| | | | | JP | 2020-522963 | A | 30 July 2020 |
| | | | | JP | 7100065 | B2 | 12 July 2022 |
| | | | | JP | 7303746 | B2 | 05 July 2023 |
| | | | | KR | 10-2019-0054184 | A | 21 May 2019 |
| | | | | KR | 10-2020-0015741 | A | 12 February 2020 |
| | | | | KR | 10-2060797 | B1 | 11 February 2020 |
| | | | | KR | 10-2151068 | B1 | 02 September 2020 |
| | | | | US | 10917280 | B2 | 09 February 2021 |
| | | | | US | 11101956 | B2 | 24 August 2021 |
| | | | | US | 11418379 | B2 | 16 August 2022 |
| | | | | US | 2020-0162303 | A1 | 21 May 2020 |
| | | | | US | 2020-0204335 | A1 | 25 June 2020 |
| | | | | US | 2020-0266946 | A1 | 20 August 2020 |
| | | | | WO | 2018-225927 | A1 | 13 December 2018 |
| | | | | WO | 2018-225935 | A1 | 13 December 2018 |
| | | | | WO | 2018-225936 | A1 | 13 December 2018 |
| KR | 10-2021-0094455 | A | 29 July 2021 | KR | 10-2369775 | B1 | 03 March 2022 |
| | | | | US | 11569938 | B2 | 31 January 2023 |
| | | | | US | 2021-0226730 | A1 | 22 July 2021 |
| US | 2016-0353433 | A1 | 01 December 2016 | US | 10136418 | B2 | 20 November 2018 |
| | | | | US | 10334569 | B2 | 25 June 2019 |
| | | | | US | 10652867 | B2 | 12 May 2020 |

Form PCT/ISA/210 (patent family annex) (July 2022)

**INTERNATIONAL SEARCH REPORT**
Information on patent family members

International application No.

**PCT/KR2023/017162**

| Patent document cited in search report | Publication date (day/month/year) | Patent family member(s) | | | Publication date (day/month/year) |
|---|---|---|---|---|---|
| | | US | 10880875 | B2 | 29 December 2020 |
| | | US | 11438882 | B2 | 06 September 2022 |
| | | US | 11601924 | B2 | 07 March 2023 |
| | | US | 11812437 | B2 | 07 November 2023 |
| | | US | 2014-0362701 | A1 | 11 December 2014 |
| | | US | 2014-0365848 | A1 | 11 December 2014 |
| | | US | 2019-0053224 | A1 | 14 February 2019 |
| | | US | 2019-0313403 | A1 | 10 October 2019 |
| | | US | 2020-0344749 | A1 | 29 October 2020 |
| | | US | 2021-0307001 | A1 | 30 September 2021 |
| | | US | 2023-0011884 | A1 | 12 January 2023 |
| | | US | 2023-0284226 | A1 | 07 September 2023 |
| | | US | 9419750 | B2 | 16 August 2016 |

Form PCT/ISA/210 (patent family annex) (July 2022)